# EUROPÄISCHE PATENTSCHRIFT

(11) **EP 3 728 038 B1**
(45) Veröffentlichungstag und Bekanntmachung des Hinweises auf die Patenterteilung: **10.11.2021**
(21) Anmeldenummer: 18829859.0
(22) Anmeldetag: 21.12.2018
(51) Int. Cl.: B64D 27/24, B64D 31/00

(54) **ANTRIEBSSYSTEM FÜR EIN FLUGZEUG**
DRIVE SYSTEM FOR AN AIRCRAFT
SYSTÈME D'ENTRAÎNEMENT POUR UN AVION

(30) Priorität: 22.12.2017 DE 102017131258
(43) Veröffentlichungstag der Anmeldung: 28.10.2020
(73) Patentinhaber: Pipistrel Vertical Solutions D.O.O., 5270 Ajdovscina (SI)
(72) Erfinder: ERZEN, David, 1231 Ljubljana (SI); GORUP, Crtomir, 6210 Sezana (SI); TOMAZIC, Jure, 5270 Ajdovscina (SI)
(74) Vertreter: Rösler Rasch van der Heide & Partner
(86) Internationale Anmeldenummer: PCT/EP2018/086592
(87) Internationale Veröffentlichungsnummer: WO 2019/122333

(56) Entgegenhaltungen:
- EP-A1- 2 865 598
- WO-A2-2014/204549
- DE-T5-112015 001 403

## Beschreibung

Die Erfindung betrifft ein Antriebssystem für ein Flugzeug/Luftfahrzeug, insbesondere ein Flugzeug mit Elektroantrieb oder einem Hybridantrieb (Kombination aus einem Verbrennungsmotor (bspw. einem Kolbenmotor oder einer Gas-Turbine) und einem Elektromotor), wobei ein Propeller mit einem Elektromotor angetrieben wird.

Im Stand der Technik ist hierzu aus der Druckschrift DE 11 2015 001 403 T5 ein elektrifiziertes Flugzeug und Verfahren zum Steuern von regenerativer elektrischer Leistung eines elektrifizierten Flugzeugs bekannt. Das darin beschriebene elektrifizierte Flugzeug umfasst einen Propeller; einen elektrischen Antriebsmotor zum Drehantrieb des Propellers und zum Erzeugen einer elektrischen Leistung durch die Drehung des Propellers; und eine Schätzeinheit zum Schätzen einer Widerstandskraft des Propellers oder eines Betrages an elektrischer Leistungserzeugung des elektrisch angetriebenen Motors basierend auf Schubanordnungsparametern des elektrischen Antriebsmotors.

Desweiteren sind dem Dokument EP 2 865 598 A1 ein elektrisches Antriebssystem für ein Luftfahrzeug und dem Dokument WO 2014/204549 A2 ein Verfahren zur Umwandlung kinetische Energie eines Flugzeugs zu entnehmen.

Die Aufgabe der Erfindung ist es, ein Antriebssystem für ein Flugzeug anzugeben, das eine einfache Bedienung durch den Piloten ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein Antriebssystem für ein Flugzeug, aufweisend einen Propeller P mit Propellerblättern, einen Elektromotor E, ein Übertragungssystem zur mechanischen Übertragung eines positiven Moments T₊ vom Elektromotor E zum Antreiben des Propellers und zur Übertragung eines negativen Moments T₋ vom Propeller P in einem Windmühlenbremszustand an den Elektromotor E, eine erste Eingabeschnittstelle zur Eingabe einer Eingabe IN1, eine erste Einheit zur Steuerung eines am Elektromotor E wirkenden Moments T, mit: T ∈ {T₋, 0, T₊} und T₋ ≤ 0 und T₊ ≥ 0, eine zweite Einheit zur Erfassung einer Drehzahl RPM_{E} des Elektromotors E, eine Auswahleinheit, mittels der ein aktiver Modus AM aus einem Propulsion-Modus PM und einem Rekuperations-Modus RM gewählt wird, mit AM ∈ {PM, RM}, wobei der Elektromotor E im Rekuperations-Modus RM elektrische Rekuperationsenergie E_{recup} erzeugt, und ein Energie-Management System, mittels dem ein Energiefluss in einem den Elektromotor E umfassenden elektrischen System des Flugzeugs abhängig von dem aktiven Modus AM gesteuert wird, wobei die Auswahleinheit derart ausgeführt und eingerichtet ist, dass der aktive Modus AM abhängig von einer Eingabe IN1 in die erste Eingabeschnittstelle, abhängig von der Drehzahl RPM_{E} des Elektromotors E und abhängig von einer vorgegebenen Enveloppe gewählt wird, wobei die Enveloppe ein maximales positives Moment Max(T₊) und ein von einer Drehzahl RPM_{E} des Elektromotors E abhängiges minimales negatives Moment Min(T₋(RPM_{E})) oder davon jeweils abhängige Werte angibt, wobei für das am Elektromotor E wirkende Moment T gilt: T = T(RPM_{E}) ∈ [Min(T₋(RPM_{E})), ..., Max(T₊)].

Der Propeller weist vorteilhaft mindestens zwei, vorteilhaft im Anstellwinkel einstellbare Propellerblätter auf. Der Propeller (bzw. die Propellerblätter) dreht vorteilhaft in der freien Atmosphäre oder in einem Strömungskanal (engl. "Fan-Duct") als sogenannter Mantelpropeller.

Der Elektromotor E ist vorteilhaft als Asynchron- oder Synchronmotor ausgebildet.

Das Übertragungssystem dient der Übertragung von Momenten (Drehmomenten) zwischen Elektromotor E und dem Propeller P. Vorteilhaft stellt das Übertragungssystem eine mechanische Verbindung zwischen Elektromotor E und dem Propeller dar. Das Übertragungssystem weist vorteilhaft ein oder mehrere Übertragungswellen, Getriebe, Lager auf. Das Übertragungssystem kann vorteilhaft einen oder mehrere Sensoren aufweisen, die Parameter, wie beispielsweise: eine aktuelle Drehzahl RPM_{E} des Elektromotors E, eine aktuelle Drehzahl RPM_{P} des Propellers, ein aktuell am Elektromotor E wirkendes Moment T etc. erfassen.

Das am Elektromotor E wirkende Moment T kann entweder ein positives Moment T₊ sein, bei dem der Elektromotor E den Propeller antreibt oder ein negatives Moment T₋ sein, bei dem der Propeller P in einem Windmühlenbremszustand, d.h. einem Zustand bei dem der Propeller durch die anströmende Luft wie ein Windrad angetrieben wird, den Elektromotor E antreibt. Es gilt: T ∈ {T₋, 0, T₊} und T₋ ≤ 0 und T₊ ≥ 0.

Im Propulsion-Modus PM erzeugt der Elektromotor E ein Moment, das auf den Propeller übertragen wird und diesen antreibt. Im Rekuperations-Modus RM arbeitet der Elektromotor E als elektrischer Generator, wobei basierend auf dem den Propeller anströmenden bzw. antreibenden Luftstrom Energie (Rekuperationsenergie E_{recup}) erzeugt wird. Vorliegend wird von folgender Konvention ausgegangen. Ein positives Moment T₊ erhält ein positives Vorzeichen, ein negatives Moment T₋ erhält ein negatives Vorzeichen.

Die erste Eingabeschnittstelle ist vorteilhaft mechanisch durch einen Piloten bedienbar. Die erste Eingabeschnittstelle umfasst vorteilhaft einen Wählhebel oder einen Schieber oder einen Drehknopf, der jeweils eine Eingabe zwischen einer ersten Stellung ("Null-Stellung") und einer zweiten Stellung ("Max-Stellung") ermöglicht. Der Wählhebel ist insbesondere im Cockpit analog einem Wählhebel zur Einstellung des Ladedrucks "engl. Throttle" oder der Motorleistung (engl. "Engine Power") ausgeführt. Eine Eingabe IN1 in die erste Eingabeschnittstelle definiert vorteilhaft die vom Elektromotor E zum Antrieb des Propellers abzugebende Leistung.

Die erste Einheit ist vorteilhaft als elektronische Steuereinheit ausgeführt und beispielsweise mit einer Einheit zur Verstellung des aktuellen Anstellwinkels der Propeller und/oder eine Einheit zur Steuerung des Energieflusses an den Elektromotor E verbunden.

Die zweite Einheit umfasst vorteilhaft einen Drehzahlsensor zu Erfassung der aktuellen Drehzahl RPM_{E} des Elektromotors E oder einer daraus abgeleiteten Größe.

Die Auswahleinheit umfasst vorteilhaft eine elektronische Einheit, welche den aktiven Modus AM abhängig von einer Eingabe IN1 in die erste Eingabeschnittstelle, abhängig von der Drehzahl RPM_{E} des Elektromotors E und abhängig von einer vorgegebenen Enveloppe nach einem vorgegebenen Zusammenhang wählt.

Die Enveloppe gibt vor bzw. definiert abhängig von einer Drehzahl RPM_{E} des Elektromotors E oder einer daraus abgeleiteten Größe ein erlaubtes maximales positives Moment Max(T₊) sowie ein von einer Drehzahl RPM_{E} des Elektromotors E abhängiges erlaubtes minimales negatives Moment Min(T₋(RPM_{E})) oder davon jeweils abhängige Werte. Das erlaubte maximale positive Moment Max(T₊) kann dabei drehzahlunabhängig vorgegeben werden, beispielsweise als Konstante. Alternativ kann das erlaubte maximale positive Moment Max(T₊) ebenfalls drehzahlabhängig vorgegeben werden. Für die Drehzahl RPM_{E} des Elektromotors E ist vorteilhaft ein erlaubter Bereich definiert, beispielsweise [0, ..., RPM_{E,MAX}], wobei RPM_{E,MAX} einen erlaubten Maximalwert der Drehzahl RPM_{E} des Elektromotors E angibt. Das erlaubte minimale negative Moment Min(T₋(RPM_{E})) variiert vorteilhaft mit der Drehzahl. Max(T₊) und/oder Min(T₋(RPM_{E})) und wird vorteilhaft in Form einer Tabelle oder in Form von mathematischer Funktionen vorgegeben. Für das am Elektromotor E wirkende Moment T gilt: T = T(RPM_{E}) ∈ [Min(T₋ (RPM_{E})), ..., Max(T₊)].

Das vorgeschlagene Antriebssystem ermöglicht eine automatische Selektion zwischen Propulsion-Modus PM und einem Rekuperations-Modus RM des Antriebssystems, wobei ein auf das Antriebssystem wirkender, vom Flugzustand abhängiger und vom Propeller ausgehender Momenteneintrag (Windmühlenbremszustand) in das Übertragungssystem berücksichtigt wird. Die Bedienung des Antriebssystems durch den Piloten wird erheblich vereinfacht und damit wird die Arbeitsbelastung des Piloten durch das vorgeschlagene Antriebssystem erheblich verringert.

Eine vorteilhafte Weiterbildung des vorgeschlagenen Antriebssystems zeichnet sich dadurch aus, dass die Eingabe IN1 einen Prozentsatz P repräsentiert: P(IN1) ∈ [0% ... 100%], und die Auswahleinheit derart ausgeführt und eingerichtet ist, dass der Rekuperations-Modus RM als der aktive Modus AM dann ausgewählt wird, wenn der Prozentsatz P(IN1) bezogen auf den Wertebereich [Min(T₋(RPM_{E})), ..., MAX(T₊)] ein negatives Moment T(IN1 ,RPM_{E}) repräsentiert, für das gilt: T₋ = T(IN1 ,RPM_{E}) < 0 und/oder T(IN1 ,RPM_{E}) < T-*, wobei T-* < 0 einen Grenzwert für ein negatives Moment T₋ angibt, und wobei gilt: P(IN1) = 0% repräsentiert Min(T₋(RPM_{E})) und P(IN1) = 100% repräsentiert MAX(T₊). Ist die erste Eingabeschnittstelle beispielsweise als Stellhebel ausgeführt, so ergibt sich für die Eingabe IN1 = "Null"-Stellung -> P(IN1) = 0%, für die Eingabe IN1 = "Max"-Stellung -> P(IN1) = 100%, und für jede Zwischenstellung des Stellhebels ein linear abhängiger Prozentwert zwischen 0% und 100%.

Beispielsweise sei durch eine Eingabe eines Piloten in die erste Eingabeschnittstelle ein Prozentwert P(IN1) = 30 % gewählt. Zu diesem Prozentwert P(IN1) = 30 % und auf Basis der bekannten aktuellen Drehzahl RPM_{E} des Elektromotors wird nun im Wertebereich [Min(T₋(RPM_{E})), ..., MAX(T₊)] ein zugeordneter Momentenwert T(IN1, RPM_{E}) ermittelt. Dabei gilt: P(IN1) = 0% entspricht dem Minimumwert: Min(T₋(RPM_{E})), P(IN1) = 100% entspricht dem Maximumwert MAX(T₊), und P(IN1) = 30% entspricht: T(P(IN1)=30%,RPM_{E}) = Min(T₋(RPM_{E})) + 0,3 * [MAX(T₊) - Min(T₋(RPM_{E}))], wobei gilt: Min(T₋(RPM_{E})) < 0. Je nach Flugzustand kann T(P(IN1) = 30%, RPM_{E}) < 0 sein, sodass sich trotz der vorgegebenen Leistungswahl durch den Piloten, beispielsweise aufgrund eines starken Sinkfluges des Flugzeugs, insgesamt ein Moment vom Propeller auf den Elektromotor E überträgt und den Elektromotor E antreibt. Wird im vorliegenden Beispiel festgestellt, dass gilt: T(P(IN1) = 30%, RPM_{E}) < 0, wird als aktueller Modus AM der Rekuperations-Modus RM gewählt. Dies erfolgt vorzugsweise automatisiert, d.h. ohne Zutun des Piloten.

Eine vorteilhafte Weiterbildung des vorgeschlagenen Antriebssystems zeichnet sich dadurch aus, dass gilt: MAX(T₊) = MAX(T₊(RPM_{E}). In diesem Fall wird die den Maximalwert positiver Momente T₊ begrenzen Enveloppe drehzahlabhängig vorgegeben.

Eine vorteilhafte Weiterbildung des vorgeschlagenen Antriebssystems zeichnet sich dadurch aus, dass eine dritte Einheit zur Erfassung des am Elektromotor E wirkenden Moments T vorhanden ist. Die dritte Einheit ist vorzugsweise der Elektromotor selbst und/oder ein (Dreh-)Momentensensor. Das auf den Elektromotor E wirkende Moment wird bevorzugt durch den Elektromotor E selbst erfasst bzw. durch eine entsprechende Auswerteeinheit ermittelt. Alternativ oder zusätzlich ist zur Erfassung des am Elektromotor E wirkenden Moments T vorteilhaft ein Drehmomentsensor vorhanden.

Eine vorteilhafte Weiterbildung des vorgeschlagenen Antriebssystems zeichnet sich dadurch aus, dass die erste Einheit zur Steuerung eines am Elektromotor E wirkenden Moments T dazu ausgeführt und eingerichtet ist, ein erfasstes negatives Moment T = T₋ abhängig von der Eingabe IN1 zu steuern.

Vorteilhaft ist die erste Einheit dazu ausgeführt und eingerichtet, ein erfasstes negatives Moment T = T₋ abhängig von zumindest einem aus folgender Liste zu steuern:
- einem Energieinhalt einer mit dem Elektromotor verbundenen Batterie,
- einem Ladestrom zu einer mit dem Elektromotor verbundenen Batterie,
- einem vorgegebenen Minimum und/oder Maximum dieses Ladestroms,
- einer Temperatur des Elektromotors und/oder einer Batterie,
- einem vorgegebenen Minimum und/oder Maximum dieser Temperatur,
- einem Zustand des Elektromotors und/oder der Batterie,
- einem vorgegebenen Minimum und/oder Maximum dieses Zustandes,
- einer aktuellen und/oder einer vorgegebenen Geschwindigkeit des Flugzeugs,
- einem vorgegebenen Minimum und/oder Maximum dieser Geschwindigkeit,
- einer aktuellen und/oder vorgegeben Sinkrate des Flugzeugs,
- einem vorgegebenen Minimum und/oder Maximum dieser Sinkrate,
- einer Drehzahl des Propellers und/oder des Elektromotors,
- einem vorgegebenen Minimum und/oder Maximum dieser Drehzahl,
- der aktuell erzeugten Rekuperationsenergie E_{recup},
- einem vorgegebenen Minimum und/oder Maximum dieser Rekuperationsenergie E_{recup},
- dem aktuellen Moment T, das vom Propeller zum Elektromotor E übertragen wird,
- einem vorgegebenen Minimum und/oder Maximum dieses Moments T
- Flughöhe und Außentemperatur,
- Anstellwinkel der Propellerblätter.

Eine vorteilhafte Weiterbildung des vorgeschlagenen Antriebssystems zeichnet sich dadurch aus, dass eine zweite Eingabeschnittstelle vorhanden ist, wobei eine Eingabe IN2 in die zweite Eingabeschnittstelle eine Drehzahl RPM_{E} des Elektromotors oder eine Drehzahl RPM_{P} des Propellers vorgibt. Die erste Eingabeschnittstelle sowie die zweite Eingabeschnittstelle ermöglichen damit eine von Flugzeugen bekannte separate Einstellung der Triebwerksleistung sowie der Propellerdrehzahl.

Vorteilhaft ist die erste Einheit dazu ausgeführt und eingerichtet, das am Elektromotor E wirkende Moment T durch Einstellen des elektrischen Energieflusses zum/vom Elektromotor und/oder durch Einstellen eines Anstellwinkels von Propellerblättern des Propellers einzustellen. Damit wird insbesondere gewährleistet, dass das Antriebssystem innerhalb der (zulässigen) Enveloppe betrieben wird.

Eine vorderste Weiterbildung des vorgeschlagenen Antriebssystems zeichnet sich dadurch aus, dass eine Senke für Rekuperationsenergie E_{recup} und/oder ein Speicher für Rekuperationsenergie E_{recup} vorhanden ist, wobei die Senke und/oder der Speicher mit dem Energiemanagementsystem verbunden ist/sind, und wobei das Energiemanagementsystem die Verwendung der Rekuperationsenergie E_{recup} steuert. Vorteilhaft ist der Speicher für Rekuperationsenergie E_{recup} eine elektrische Batterie oder ein Schwungrad oder ein Wasserstofftank. Vorteilhaft stellt die elektrische Batterie im Propulsion-Modus PM elektrische Energie zum Antrieb des Elektromotors E bereit. Vorteilhaft ist die Senke für Rekuperationsenergie E_{recup} eine Klimaanlage des Flugzeugs und/oder eine elektrische Heizung des Flugzeugs und/oder eine elektrische Enteisungsanlage des Flugzeugs.

Vorteilhaft ist das Energiemanagementsystem derart ausgeführt und eingerichtet, dass im Rekuperations-Modus PM die gesamte erzeugte Rekuperationsenergie E_{recup} zunächst in den Speicher für Rekuperationsenergie E_{recup} geleitet wird, bis ein vorgegebenes Maximum einer Speicherkapazität des Speichers erreicht ist, und dann zu der Senke für Rekuperationsenergie E_{recup} geleitet wird.

Alternativ ist das Energiemanagementsystem derart ausgeführt und eingerichtet, dass im Rekuperations-Modus PM die erzeugte Rekuperationsenergie E_{recup} abhängig von einem Flugzeugzustand zum Speicher für Rekuperationsenergie E_{recup} und/oder zur Senke für Rekuperationsenergie E_{recup} geleitet wird. Vorteilhaft ist dabei der Flugzeugzustand durch zumindest eines der nachfolgenden Liste bestimmt:
- Konfiguration des Flugzeugs,
- kinematischer Zustand des Flugzeugs,
- Zustand des elektrischen Systems des Flugzeugs,
- aerodynamischer Zustand des Flugzeugs,
- physikalischer Zustand der das Flugzeug umgebenden Atmosphäre
- sturkurelle Randbedingungen z.B. Drehzahllimit des Propellers

Vorteilhaft ist die erste Einheit dazu ausgeführt und eingerichtet, die Enveloppe zur Steuerung des am Elektromotor E wirkenden Moments T zu verwenden. Vorteilhaft ist die erste Einheit dazu ausgeführt und eingerichtet, Max(T₊) der Enveloppe basierend auf der aktuellen Drehzahl RPM_{E} des Elektromotors E zu ermitteln.

Vorteilhaft ist die Auswahleinheit dazu ausgeführt und eingerichtet, Min(T₋(RPME)) der Enveloppe basierend auf einer Drehzahl RPM_{P} des Propellers P zu ermitteln, wobei während eines Fluges gilt: RPM_{P} ≠ 0.

Eine vorteilhafte Weiterbildung des vorgeschlagenen Antriebssystems zeichnet sich dadurch aus, dass die Anzeigeeinheit dazu ausgeführt ist, ein oder mehrere der folgenden Informationen anzuzeigen:
- Information über ein negatives Moment T₋ mit dem der Elektromotor E angetrieben wird,
- ein Parameter der von T₋ abhängt,
- Information über ein positives Moment T₊ mit dem der Propeller P vom Elektromotor E angetrieben wird,
- ein Parameter der von T₊ abhängt,
- eine Information über den aktuellen Modus AM,
- die aktuell erzeugte Rekuperationsenergie E_{recup} oder eine davon abgeleitete Größe.

Ein weiterer Aspekt der Erfindung betrifft ein Flugzeug bzw. Luftfahrzeug mit einem Antriebssystem wie vorstehend beschrieben.

Ein weiterer Aspekt der Erfindung betrifft ein Verfahren zum Betrieb eines Antriebssystems für ein Flugzeug/Luftfahrzeug, wobei das Antriebssystem aufweist: einen Propeller mit Propellerblättern, einen Elektromotor, ein Übertragungssystem zur mechanischen Übertragung eines positiven Moments T₊ vom Elektromotor E zum Antreiben des Propellers und zur Übertragung eines negativen Moments T₋ vom Propeller in einem Windmühlenbremszustand zum Antreiben des Elektromotors E, eine erste Eingabeschnittstelle zur Eingabe einer Eingabe IN1, eine erste Einheit zur Steuerung eines am Elektromotor E wirkenden Moments T, mit: T ∈ {T₋, 0, T₊} und T₋ ≤ 0 und T₊ ≥ 0, eine zweite Einheit zur Erfassung einer Drehzahl RPM_{E} des Elektromotors E, eine Auswahleinheit, mittels der ein aktiver Modus AM aus einem Propulsion-Modus PM und einem Rekuperations-Modus RM gewählt wird, mit AM ∈ {PM, RM}, wobei der Elektromotor E im Rekuperations-Modus RM elektrische Rekuperationsenergie E_{recup} erzeugt, und ein Energie-Management System, mittels dem ein Energiefluss in einem den Elektromotor E umfassenden elektrischen System des Flugzeugs abhängig von dem aktiven Modus AM gesteuert wird, mit folgenden Schritten: Auswählen des aktiven Modus AM durch die Auswahleinheit abhängig von einer Eingabe IN1 in die erste Eingabeschnittstelle, abhängig von der Drehzahl RPM_{E} des Elektromotors E und abhängig von einer vorgegebenen Enveloppe, wobei die Enveloppe ein maximales positives Moment Max(T₊) und ein von einer Drehzahl RPM_{E} des Elektromotors E abhängiges minimales negatives Moment Min(T₋(RPM_{E})) oder davon jeweils abhängige Werte angibt, wobei für das am Elektromotor E wirkende Moment T gilt: T = T(RPM_{E}) ∈ [Min(T₋(RPM_{E})), ..., Max(T₊)].

Eine vorteilhafte Weiterbildung des vorgeschlagenen Verfahrens zeichnet sich dadurch aus, dass die Eingabe IN1 einen Prozentsatz P repräsentiert: P(IN1) ∈ [0% ... 100%], und die Auswahleinheit den Rekuperations-Modus RM als den aktiven Modus AM dann auswählt, wenn der Prozentsatz P(IN1) bezogen auf den Wertebereich [Min(T₋(RPM_{E})), ..., MAX(T₊)] ein negatives Moment T(IN1,RPM_{E}) repräsentiert, für das gilt: T₋ = T(IN1 ,RPM_{E}) < 0 und/oder T(IN1 ,RPM_{E}) < T-*, wobei T-* < 0 einen Grenzwert für ein negatives Moment T₋ angibt, und wobei gilt: P(IN1) = 0% repräsentiert Min(T₋(RPM_{E})) und P(IN1) = 100% repräsentiert MAX(T₊). Vorteilhaft gilt: MAX(T₊) = MAX(T₊(RPM_{E}).

Eine vorderste Weiterbildung des vorgeschlagenen Verfahrens zeichnet sich dadurch aus, dass das am Elektromotor wirkende Moment T mittels einer dritten Einheit erfasst wird. Vorteilhaft steuert die erste Einheit ein erfasstes negatives Moment T = T₋ abhängig von einer Eingabe IN1. Vorteilhaft steuert die erste Einheit ein erfasstes negatives Moment T = T₋ abhängig von zumindest einem aus folgender Liste:
- einem Energieinhalt einer mit dem Elektromotor verbundenen Batterie,
- einem Ladestrom zu einer mit dem Elektromotor verbundenen Batterie,
- einem vorgegebenen Minimum und/oder Maximum dieses Ladestroms,
- einer Temperatur des Elektromotors und/oder einer Batterie,
- einem vorgegebenen Minimum und/oder Maximum dieser Temperatur,
- einem Zustand des Elektromotors und/oder der Batterie,
- einem vorgegebenen Minimum und/oder Maximum dieses Zustandes,
- einer aktuellen und/oder einer vorgegebenen Geschwindigkeit des Flugzeugs,
- einem vorgegebenen Minimum und/oder Maximum dieser Geschwindigkeit,
- einer aktuellen und/oder vorgegeben Sinkrate des Flugzeugs,
- einem vorgegebenen Minimum und/oder Maximum dieser Sinkrate,
- einer Drehzahl des Propellers und/oder des Elektromotors,
- einem vorgegebenen Minimum und/oder Maximum dieser Drehzahl,
- der aktuell erzeugten Rekuperationsenergie E_{recup},
- einem vorgegebenen Minimum und/oder Maximum dieser Rekuperationsenergie E_{recup},
- dem aktuellen Moment T, das vom Propeller zum Elektromotor übertragen wird,
- einem vorgegebenen Minimum und/oder Maximum dieses Moments T
- Flughöhe und Außentemperatur,
- Anstellwinkel der Propellerblätter.

Gemäß einer vorteilhaften Weiterbildung des Verfahrens gibt eine Eingabe IN2 in eine zweite Eingabeschnittstelle eine Drehzahl RPM_{E} des Elektromotors E oder eine Drehzahl RPM_{P} des Propellers vor.

Vorteilhaft stellt die erste Einheit das am Elektromotor E wirkende Moment T durch Einstellen des elektrischen Energieflusses zum/vom Elektromotor und/oder durch Einstellen eines Anstellwinkels von Propellerblättern des Propellers ein.

Gemäß einer vorteilhaften Weiterbildung des vorgeschlagenen Verfahrens ist eine Senke für Rekuperationsenergie E_{recup} und/oder ein Speicher für Rekuperationsenergie E_{recup} vorhanden, wobei die Senke und/oder der Speicher mit dem Energiemanagementsystem verbunden ist/sind, und wobei das Energiemanagementsystem die Verwendung der Rekuperationsenergie E_{recup} steuert. Vorteilhaft ist der Speicher für Rekuperationsenergie E_{recup} eine elektrische Batterie oder ein Schwungrad oder ein Wasserstofftank. Vorteilhaft stellt die elektrische Batterie im Propulsion-Modus PM elektrische Energie zum Antrieb des Elektromotors E bereit. Vorteilhaft ist die Senke für Rekuperationsenergie E_{recup} eine Klimaanlage des Flugzeugs und/oder eine elektrische Heizung des Flugzeugs und/oder eine elektrische Enteisungsanlage des Flugzeugs. Vorteilhaft leitet das Energiemanagementsystem im Rekuperations-Modus PM die gesamte erzeugte Rekuperationsenergie E_{recup} zunächst in den Speicher für Rekuperationsenergie E_{recup}, bis ein vorgegebenes Maximum einer Speicherkapazität des Speichers erreicht ist, und dann zu der Senke für Rekuperationsenergie E_{recup}. Alternativ leitet das Energiemanagementsystem im Rekuperations-Modus PM die erzeugte Rekuperationsenergie E_{recup} abhängig von einem Flugzeugzustand zum Speicher für Rekuperationsenergie E_{recup} und/oder zur Senke für Rekuperationsenergie E_{recup}. Dabei ist der Flugzeugzustand vorteilhaft durch zumindest eines der nachfolgenden Liste bestimmt:
- Konfiguration des Flugzeugs,
- kinematischer Zustand des Flugzeugs,
- Zustand des elektrischen Systems des Flugzeugs,
- aerodynamischer Zustand des Flugzeugs,
- physikalischer Zustand der das Flugzeug umgebenden Atmosphäre,
- sturkurelle Randbedingungen z.B. Drehzahllimit des Propellers.

Vorteilhaft verwendet die erste Einheit die Enveloppe zur Steuerung des am Elektromotor wirkenden Moments T. Vorteilhaft ermittelt die erste Einheit Max(T₊) der Enveloppe basierend auf der aktuellen Drehzahl RPM_{E} des Elektromotors E. Vorteilhaft ermittelt die Auswahleinheit Min(T₋(RPM_{E})) der Enveloppe basierend auf einer Drehzahl RPM_{P} des Propellers Pt, wobei während eines Fluges gilt: RPM_{P} ≠ 0.

Eine vorteilhafte Weiterbildung des vorgeschlagenen Verfahrens zeichnet sich dadurch aus, dass eine Anzeigeeinheit vorhanden ist, wobei die Anzeigeeinheit ein oder mehrere der folgenden Informationen anzeigt:
- Information über ein negatives Moment T₋ mit dem der Elektromotor E angetrieben wird,
- ein Parameter der von T₋ abhängt,
- Information über ein positives Moment T₊ mit dem der Propeller P vom Elektromotor angetrieben wird,
- ein Parameter der von T₊ abhängt,
- eine Information über den aktuellen Modus AM,
- die aktuell erzeugte Rekuperationsenergie E_{recup} oder eine davon abgeleitete Größe.

Vorteile und Erläuterungen des vorgeschlagenen Verfahrens ergeben sich durch eine analoge und sinngemäße Übertragung der zum vorgeschlagenen Antriebssystem vorstehend gemachten Ausführungen.

Die Aufgabe der Erfindung ist weiterhin gelöst durch ein Computersystem, mit einer Datenverarbeitungsvorrichtung, wobei die Datenverarbeitungsvorrichtung derart ausgestaltet ist, dass ein Verfahren, wie vorstehend ausgeführt, auf der Datenverarbeitungsvorrichtung ausgeführt wird.

Zudem wird die Aufgabe der Erfindung gelöst durch ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Schließlich betrifft die Erfindung ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine schematisierte Darstellung eines erfindungsgemäßen Antriebssystems, und
- Fig. 2: eine Darstellung zur Erläuterung der Funktionsweise der Auswahleinheit.

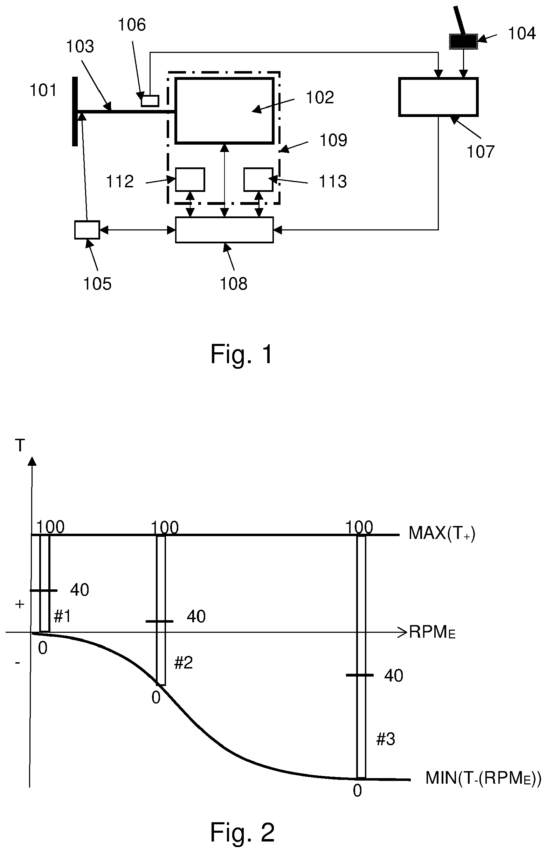

**Fig. 1** zeigt eine schematisierte Darstellung eines erfindungsgemäßen Antriebssystems für ein Flugzeug. Das Antriebssystem weist auf: einen Propeller P 101 mit zwei Propellerblättern, einen Elektromotor E 102, ein Übertragungssystem 103 zur mechanischen Übertragung eines positiven Moments T₊ vom Elektromotor E 102 zum Antreiben des Propellers P 101 und zur Übertragung eines negativen Moments T₋ vom Propeller P 101 in einem Windmühlenbremszustand zum Antreiben des Elektromotors E 102.

Das Antriebssystem weist weiterhin auf eine erste Eingabeschnittstelle 104, die einen Wählhebel zur Eingabe einer Eingabe IN1 umfasst, sowie eine erste Einheit 105 zur Steuerung eines am Elektromotor E 102 wirkenden Moments T, mit: T ∈ {T₋, 0, T₊} und T₋ ≤ 0 und T₊ ≥ 0. Die Einheit 105 steuert vorliegend den Anstellwinkel der Propellerblätter sowie über das Energie-Management System einen Energiefluss vom bzw. zum Elektromotor E 102.

Das Antriebssystem umfasst weiterhin eine zweite Einheit 106 zur Erfassung einer Drehzahl RPM_{E} des Elektromotors E 102, eine Auswahleinheit 107, mittels der ein aktiver Modus AM aus einem Propulsion-Modus PM und einem Rekuperations-Modus RM gewählt wird, mit AM ∈ {PM, RM}, wobei der Elektromotor E (102) im Rekuperations-Modus RM elektrische Rekuperationsenergie E_{recup} erzeugt, und ein Energie-Management System 108, mittels dem ein Energiefluss in einem den Elektromotor E 102 umfassenden elektrischen System 109 des Flugzeugs abhängig von dem aktiven Modus AM gesteuert wird. Das elektrische System 109 umfasst neben dem Elektromotor E 102 eine Senke 112 für Rekuperationsenergie E_{recup}, vorliegend eine elektrische Kabinenheizung, sowie einen Speicher 113 für Rekuperationsenergie E_{recup}, vorliegend eine elektrische Batterie.

Die Auswahleinheit 107 ist derart ausgeführt und eingerichtet ist, dass der aktive Modus AM abhängig von einer Eingabe IN1 in die erste Eingabeschnittstelle 104, abhängig von der Drehzahl RPM_{E} des Elektromotors E 102 und abhängig von einer vorgegebenen Enveloppe gewählt wird, wobei die Enveloppe ein maximales positives Moment Max(T₊) und ein von einer Drehzahl RPM_{E} des Elektromotors E 102 abhängiges minimales negatives Moment Min(T₋(RPM_{E})) oder davon jeweils abhängige Werte angibt, wobei für das am Elektromotor E 102 wirkende Moment T gilt: T = T(RPME) ∈ [Min(T₋(RPM_{E})), ..., Max(T₊)].

Die Eingabe IN1 repräsentiert vorliegend einen Prozentsatz P: P = P(IN1) ∈ [0% ... 100%]. Weiterhin ist die Auswahleinheit 107 derart ausgeführt und eingerichtet, dass der Rekuperations-Modus RM als der aktive Modus AM dann ausgewählt wird, wenn der Prozentsatz P(IN1) bezogen auf den Wertebereich [Min(T₋(RPM_{E})), ..., MAX(T₊)] ein negatives Moment T(IN1 ,RPM_{E}) repräsentiert, für das gilt: T₋ = T(IN1 ,RPM_{E}) < 0 und/oder T(IN1 ,RPM_{E}) < T-*, wobei T-* < 0 einen Grenzwert für ein negatives Moment T₋ angibt, und wobei gilt: P(IN1) = 0% repräsentiert Min(T₋(RPM_{E})) und P(IN1) = 100% repräsentiert MAX(T₊).

Die in Figur 1 angegebenen Pfeile zwischen den angegebenen Einheiten geben einen Informationsfluss und/oder eine Wirkbeziehung zwischen den Einheiten an.

**Fig. 2** zeigt eine Darstellung zur Erläuterung der Funktionsweise der in Figur 1 beschriebenen Auswahleinheit 107. Dargestellt ist ein Koordinatensystem, bei dem entlang der nach rechts verlaufenden horizontalen Achse die Drehzahl RPM_{E} des Elektromotors E 102 aufgetragen ist, wobei die Drehzahl RPM_{E} im Koordinatenursprung gleich Null ist und nach rechts zunimmt. Entlang der vertikalen Achse ist das am Elektromotor E 102 wirkende Moment T aufgetragen. Oberhalb der horizontalen Achse ist ein positives Moment T = T₊ > 0, unterhalb der horizontalen Achse ein negatives Moment T = T₋ < 0 aufgetragen. In dem Koordinatensystem sind die die Enveloppe kennzeichnenden Maximalwerte MAX(T₊) bzw. Minimalwerte Min(T₋(RPM_{E})) eingetragen. Deutlich erkennbar ist, dass MAX(T₊) ein konstantes Moment definiert, d.h. unabhängig von der Drehzahl RPM_{E} des Elektromotors E 102 ist. Deutlich erkennbar ist zudem, dass Min(T₋(RPM_{E})) von der Drehzahl RPM_{E} abhängig ist. Die Enveloppe begrenzt einerseits ein vom Elektromotor E 102 an den Propeller P 101 übertragenes positives Moment T₊ und andererseits ein vom Propeller P 101 an den Elektromotor E 102 übertragenes negatives Moment T₋. Min(T₋(RPM_{E})) definiert somit auch ein für eine Gewinnung von Rekuperationsenergie E_{recup} maximal absorbierbares Moment.

Die dargestellten drei vertikalen Balken, geben für drei jeweils unterschiedliche Drehzahlen RPM_{E} Wertebereiche [Min(T₋(RPM_{E})), ..., MAX(T₊)] an, aus denen am Elektromotor E 102 wirkende Momente generiert werden dürfen. Wird von einem Piloten an der ersten Eingabeschnittstelle 104 eine Eingabe IN1 getätigt, die einem Prozentsatz P = P(IN1) = 0% entspricht, so ergibt sich das maximal für eine Gewinnung von Rekuperationsenergie E_{recup} absorbierbares Moment durch die Kurve für Min(T₋(RPM_{E})). Wird von einem Piloten an der ersten Eingabeschnittstelle 104 eine Eingabe IN1 getätigt, die einem Prozentsatz P = P(IN1) = 100% entspricht, so wird das maximale vom Elektromotor E 102 an den Propeller übertragene Moment durch die Kurve MAX(T₊) begrenzt. Wird nun von einem Piloten an der ersten Eingabeschnittstelle 104 eine Eingabe IN1 getätigt, die einem Prozentsatz P = P(IN1) = 40% entspricht, so repräsentiert dieser Prozentsatz 40% bezogen auf den drehzahlabhängig angegebenen Wertebereich [Min(T₋(RPM_{E})), ..., MAX(T₊)] im Fall #1 einem Moment T = T₊ = T(IN1 ,RPM_{E}) > 0 von nahezu 40% des erlaubten maximalen positiven Moments MAX(T₊), im Fall #2 einem Moment T = T₊ = T(IN1,RPM_{E}) > 0 von ca.10% des erlaubten maximalen positiven Moments MAX(T₊) und im Fall #3 einem Moment T = T₋ = T(IN1 ,RPM_{E}) < 0. Im Fall #3 hat der Pilot den Stellhebel der ersten Eingabeschnittstelle 104 auf 40 % (bspw. Leistung) gesetzt, doch beispielsweise durch Einleitung eines starken Sinkfluges und den durch die anströmende Luft am Propeller P 101 verursachten Momenteneintrag wird in diesem Zustand nicht der Propeller P 101 durch den Elektromotor E 102 angetrieben, sondern umgedreht, der Propeller P 101 treibt den Elektromotor E 102 an.

Vorliegend ist die Auswahleinheit 107 derart ausgeführt und eingerichtet, dass der Rekuperations-Modus RM als der aktive Modus AM dann ausgewählt wird, wenn der Prozentsatz P(IN1) bezogen auf den Wertebereich [Min(T₋(RPM_{E})), ..., MAX(T₊)] ein negatives Moment T(IN1 ,RPM_{E}) repräsentiert, für das gilt: T₋ = T(IN1 ,RPM_{E}) < 0.

Die Auswahl des aktiven Modus AM erfolgt weiterhin vorliegend automatisch.

Obwohl die Erfindung im Detail durch bevorzugte Ausführungsbeispiele näher illustriert und erläutert wurde, so ist die Erfindung nicht durch die offenbarten Beispiele eingeschränkt. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 101: Propeller P
- 102: Elektromotor E
- 103: Übertragungssystem
- 104: erste Eingabeschnittstelle
- 105: erste Einheit
- 106: zweite Einheit
- 107: Auswahleinheit
- 108: Energie-Management System
- 109: elektrisches System
- 110: dritte Einheit
- 111: Anzeigeeinheit
- 112: Senke für Rekuperationsenergie E_{recup}
- 113: Speicher für Rekuperationsenergie E_{recup}

## Patentansprüche

1. Antriebssystem für ein Flugzeug, aufweisend
- einen Propeller P (101) mit Propellerblättern,
- einen Elektromotor E (102),
- ein Übertragungssystem (103) zur mechanischen Übertragung eines positiven Moments T₊ vom Elektromotor E (102) zum Antreiben des Propellers P (101) und zur Übertragung eines negativen Moments T₋ vom Propeller P (101) in einem Windmühlenbremszustand zum Antreiben des Elektromotors E (102),
- eine erste Eingabeschnittstelle (104) zur Eingabe einer Eingabe IN1,
- eine erste Einheit (105) zur Steuerung eines am Elektromotor E (102) wirkenden Moments T, mit: T ∈ {T₋, 0, T₊} und T₋ ≤ 0 und T₊ ≥ 0,
- eine zweite Einheit (106) zur Erfassung einer Drehzahl RPM_{E} des Elektromotors E (102),
- eine Auswahleinheit (107), mittels der ein aktiver Modus AM aus einem Propulsion-Modus PM und einem Rekuperations-Modus RM gewählt wird, mit AM ∈ {PM, RM}, wobei der Elektromotor E (102) im Rekuperations-Modus RM elektrische Rekuperationsenergie E_{recup} erzeugt, und
- ein Energie-Management System (108), mittels dem ein Energiefluss in einem den Elektromotor E (102) umfassenden elektrischen System (109) des Flugzeugs abhängig von dem aktiven Modus AM gesteuert wird,
wobei
- die Auswahleinheit (107) derart ausgeführt und eingerichtet ist, dass der aktive Modus AM abhängig von einer Eingabe IN1 in die erste Eingabeschnittstelle (104), abhängig von der Drehzahl RPM_{E} des Elektromotors E (102) und abhängig von einer vorgegebenen Enveloppe gewählt wird, wobei die Enveloppe ein maximales positives Moment Max(T₊) und ein von einer Drehzahl RPM_{E} des Elektromotors E (102) abhängiges minimales negatives Moment Min(T₋(RPM_{E})) oder davon jeweils abhängige Werte angibt, wobei für das am Elektromotor E (102) wirkende Moment T gilt: T = T(RPM_{E}) ∈ [Min(T₋(RPM_{E})), ..., Max(T₊)].

2. Antriebssystem nach Anspruch 1,
bei dem die Eingabe IN1 einen Prozentsatz P repräsentiert: P(IN1) ∈ [0% ... 100%], und die Auswahleinheit (107) derart ausgeführt und eingerichtet ist, dass der Rekuperations-Modus RM als der aktive Modus AM dann ausgewählt wird, wenn der Prozentsatz P(IN1) bezogen auf den Wertebereich [Min(T₋(RPM_{E})), ..., MAX(T₊)] ein negatives Moment T(IN1 ,RPM_{E}) repräsentiert, für das gilt: T₋ = T(IN1 ,RPM_{E}) < 0 und/oder T(IN1,RPM_{E}) < T-*, wobei T-* < 0 einen Grenzwert für ein negatives Moment T₋ angibt, und wobei gilt: P(IN1) = 0% repräsentiert Min(T₋(RPM_{E})) und P(IN1) = 100% repräsentiert MAX(T₊).

3. Antriebssystem nach einem der Ansprüche 1 bis 2,
bei dem eine dritte Einheit (110) zur Erfassung des am Elektromotor E (102) wirkenden Moments T vorhanden ist.

4. Antriebssystem nach Anspruch 3,
bei dem die erste Einheit (105) dazu ausgeführt und eingerichtet ist, ein am Elektromotor E (102) wirkendes negatives Moment T = T₋ abhängig von zumindest einem aus folgender Liste zu steuern:
- einem Energieinhalt einer mit dem Elektromotor E (102) verbundenen Batterie,
- einem Ladestrom zu einer mit dem Elektromotor E (102) verbundenen Batterie,
- einem vorgegebenen Minimum und/oder Maximum dieses Ladestroms,
- einer Temperatur des Elektromotors E (102) und/oder einer Batterie,
- einem vorgegebenen Minimum und/oder Maximum dieser Temperatur,
- einem Zustand des Elektromotors E (102) und/oder der Batterie,
- einem vorgegebenen Minimum und/oder Maximum dieses Zustandes,
- einer aktuellen und/oder einer vorgegebenen Geschwindigkeit des Flugzeugs,
- einem vorgegebenen Minimum und/oder Maximum dieser Geschwindigkeit,
- einer aktuellen und/oder vorgegeben Sinkrate des Flugzeugs,
- einem vorgegebenen Minimum und/oder Maximum dieser Sinkrate,
- von einer Eingabe IN1,
- einer Drehzahl des Propellers P (101) und/oder des Elektromotors E (102),
- einem vorgegebenen Minimum und/oder Maximum dieser Drehzahl,
- der aktuell erzeugten Rekuperationsenergie E_{recup},
- einem vorgegebenen Minimum und/oder Maximum dieser Rekuperationsenergie E_{recup},
- dem aktuellen Moment T, das vom Propeller P (101) zum Elektromotor E (102) übertragen wird,
- einem vorgegebenen Minimum und/oder Maximum dieses Moments T,
- Flughöhe und Außentemperatur,
- Anstellwinkel der Propellerblätter.

5. Antriebssystem nach Anspruch 4,
bei dem die erste Einheit (105) dazu ausgeführt und eingerichtet ist, das am Elektromotor E (102) wirkende Moment T durch Einstellen des elektrischen Energieflusses zum/vom Elektromotor E (102) und/oder durch Einstellen eines Anstellwinkels von Propellerblättern des Propellers P (101) einzustellen.

6. Antriebssystem nach einem der Ansprüche 1 bis 5,
bei dem eine Senke für Rekuperationsenergie E_{recup} und/oder ein Speicher für Rekuperationsenergie E_{recup} vorhanden ist, wobei die Senke und/oder der Speicher mit einem Energiemanagementsystem (108) verbunden ist/sind, und wobei das Energiemanagementsystem (108) die Verwendung der Rekuperationsenergie E_{recup} steuert.

7. Antriebssystem nach einem der Ansprüche 1 bis 6,
mit einer Anzeigeeinheit (111), wobei die Anzeigeeinheit (111) dazu ausgeführt ist, ein oder mehrere der folgenden Informationen anzuzeigen:
- Information über ein negatives Moment T₋ mit dem der Elektromotor E (102) angetrieben wird,
- ein Parameter der von T₋ abhängt,
- Information über ein positives Moment T₊ mit dem der Propeller P (101) vom Elektromotor E (102) angetrieben wird,
- ein Parameter der von T₊ abhängt,
- eine Information über den aktuellen Modus AM,
- die aktuell erzeugte Rekuperationsenergie E_{recup} oder eine davon abgeleitete Größe.

8. Flugzeug mit einem Antriebssystem nach einem der Ansprüche 1 bis 7.

9. Verfahren zum Betrieb eines Antriebssystems für ein Flugzeug, wobei das Antriebssystem aufweist:
- einen Propeller P (101) mit Propellerblättern,
- einen Elektromotor E (102),
- ein Übertragungssystem (103) zur mechanischen Übertragung eines positiven Moments T₊ vom Elektromotor E (102) zum Antreiben des Propellers P (102) und zur Übertragung eines negativen Moments T₋ vom Propeller P (101) in einem Windmühlenbremszustand zum Antreiben des Elektromotors E (102),
- eine erste Eingabeschnittstelle (104) zur Eingabe einer Eingabe IN1,
- eine erste Einheit (105) zur Steuerung eines am Elektromotor E (102) wirkenden Moments T, mit: T ∈ {T₋, 0, T₊} und T₋ ≤ 0 und T₊ ≥ 0,
- eine zweite Einheit (106) zur Erfassung einer Drehzahl RPM_{E} des Elektromotors E (102),
- eine Auswahleinheit (107), mittels der ein aktiver Modus AM aus einem Propulsion-Modus PM und einem Rekuperations-Modus RM gewählt wird, mit AM ∈ {PM, RM}, wobei der Elektromotor E (102) im Rekuperations-Modus RM elektrische Rekuperationsenergie E_{recup} erzeugt, und
- ein Energie-Management System (108), mittels dem ein Energiefluss in einem den Elektromotor E (102) umfassenden elektrischen System (109) des Flugzeugs abhängig von dem aktiven Modus AM gesteuert wird,
mit folgenden Schritten:
Auswählen des aktiven Modus AM durch die Auswahleinheit (107) abhängig von einer Eingabe IN1 in die erste Eingabeschnittstelle (104), abhängig von der Drehzahl RPM_{E} des Elektromotors E (102) und abhängig von einer vorgegebenen Enveloppe, wobei die Enveloppe ein maximales positives Moment Max(T₊) und ein von einer Drehzahl RPM_{E} des Elektromotors E (102) abhängiges minimales negatives Moment Min(T₋(RPM_{E})) oder davon jeweils abhängige Werte angibt, wobei für das am Elektromotor E (102) wirkende Moment T gilt: T = T(RPM_{E}) ∈ [Min(T₋(RPM_{E})), ..., Max(T₊)].

10. Verfahren nach Anspruch 9,
bei dem die Eingabe IN1 einen Prozentsatz P repräsentiert: P(IN1) ∈ [0% ... 100%], und die Auswahleinheit (107) den Rekuperations-Modus RM als den aktiven Modus AM dann auswählt, wenn der Prozentsatz P(IN1) bezogen auf den Wertebereich [Min(T₋(RPM_{E})), ..., MAX(T₊)] ein negatives Moment T(IN1,RPM_{E}) repräsentiert, für das gilt: T₋ = T(IN1 ,RPM_{E}) < 0 und/oder T(IN1 ,RPM_{E}) < T-*, wobei T-* < 0 einen Grenzwert für ein negatives Moment T₋ angibt, und wobei gilt: P(IN1) = 0% repräsentiert Min(T₋(RPM_{E})) und P(IN1) = 100% repräsentiert MAX(T₊).

## Claims

1. Propulsion system for an aircraft, having:
- a propeller P (101) with propeller blades,
- an electric motor E (102),
- a transmission system (103) for the mechanical transmission of a positive torque T₊ from the electric motor E (102) so as to drive the propeller P (101), and for the transmission of a negative torque T_ from the propeller P (101) in a windmilling braking state so as to drive the electric motor E (102),
- a first input interface (104) for the input of an input IN1,
- a first unit (105) for the control of a torque T acting on the electric motor E (102), where: T ε {T_, 0, T₊} and T_ ≤ 0 and T₊ ≥ 0,
- a second unit (106) for the detection of a rotational speed RPM_{E} of the electric motor E (102),
- a selection unit (107), by means of which an active mode AM is selected from a propulsion mode PM and a recuperation mode RM, where AM ε {PM, RM}, wherein in the recuperation mode RM the electric motor E (102) generates recuperative electrical energy E_{recup}, and
- an energy management system (108), by means of which an energy flow in an electrical system (109) of the aircraft, comprising the electric motor E (102), is controlled as a function of the active mode AM,
wherein
- the selection unit (107) is designed and set up such that the active mode AM is selected as a function of an input IN1 into the first input interface (104), as a function of the rotational speed RPM_{E} of the electric motor E (102), and as a function of a predetermined envelope, wherein the envelope specifies a maximum positive torque Max (T₊) and a minimum negative torque Min (T_ (RPM_{E})) dependent on a rotational speed RPM_{E} of the electric motor E (102), or values dependent thereon in each case, wherein the following applies to the torque T acting on the electric motor E (102): T = T (RPM_{E}) ε [Min (T_(RPM_{E})), ..., Max (T₊)].

2. Propulsion system according to Claim 1,
in which the input IN1 represents a percentage P, where: P (IN1) ε [0% ... 100%], and the selection unit (107) is designed and set up such that the recuperation mode RM is selected as the active mode AM, if the percentage P (IN1) related to the range of values [Min (T_(RPM_{E})), ... , Max (T₊)] represents a negative torque T (IN1, RPM_{E}), for which the following applies: T_ = T (IN1, RPM_{E}) < 0 and/or T (IN1, RPM_{E}) < T_*, wherein T_* < 0 specifies a limiting value for a negative torque T_, and wherein the following applies: P (IN1) = 0% represents Min (T_(RPM_{E})), and P (IN1) = 100% represents Max (T₊).

3. Propulsion system according to one of the Claims 1 to 2,
in which a third unit (110) is present, for the detection of the torque T acting on the electric motor E (102).

4. Propulsion system according to Claim 3,
in which the first unit (105) is designed and set up for purposes of controlling a negative torque T = T_ acting on the electric motor E (102) as a function of at least one item from the following list:
- an energy content of a battery connected to the electric motor E (102),
- a charging current to a battery connected to the electric motor E (102),
- a predetermined minimum and/or maximum of the said charging current,
- a temperature of the electric motor E (102) and/or a battery,
- a predetermined minimum and/or maximum of the said temperature,
- a state of the electric motor E (102) and/or the battery,
- a predetermined minimum and/or maximum of the said state,
- a current and/or a predetermined velocity of the aircraft,
- a predetermined minimum and/or maximum of the said velocity,
- a current and/or predetermined rate of descent of the aircraft,
- a predetermined minimum and/or maximum of the said rate of descent,
- an input IN1,
- a rotational speed of the propeller P (101) and/or the electric motor E (102),
- a predetermined minimum and/or maximum of the said rotational speed,
- the currently generated recuperative energy E_{recup},
- a predetermined minimum and/or maximum of the said recuperative energy E_{recup},
- the current torque T transmitted from the propeller P (101) to the electric motor E (102),
- a predetermined minimum and/or maximum of the said torque T,
- flight altitude and external temperature,
- angle of attack of the propeller blades.

5. Propulsion system according to Claim 4,
in which the first unit (105) is designed and set up for purposes of adjusting the torque T acting on the electric motor E (102) by an adjustment of the flow of electric power to/from the electric motor E (102), and/or by an adjustment of an angle of attack of propeller blades of the propeller P (101).

6. Propulsion system according to one of the Claims 1 to 5,
in which a sink for recuperative energy E_{recup} and/or a store for recuperative energy E_{recup} is/are present, wherein the sink and/or the store is/are connected to an energy management system (108), and wherein the energy management system (108) controls the use of the recuperative energy E_{recup}.

7. Propulsion system according to one of the Claims 1 to 6,
with a display unit (111), wherein the display unit (111) is designed for purposes of displaying one or a plurality of the following items of information:
- information concerning a negative torque T_, with which the electric motor E (102) is driven,
- a parameter that is a function of T_,
- information concerning a positive torque T₊, with which the propeller P (101) is driven by the electric motor E (102),
- a parameter that is a function of T₊,
- information concerning the current mode AM,
- the currently generated recuperative energy E_{recup}, or a quantity derived from the latter.

8. Aircraft with a propulsion system according to one of the Claims 1 to 7.

9. Method for the operation of a propulsion system for an aircraft, wherein the propulsion system has:
- a propeller P (101) with propeller blades,
- an electric motor E (102),
- a transmission system (103) for the mechanical transmission of a positive torque T₊ from the electric motor E (102) so as to drive the propeller P (101), and for the transmission of a negative torque T_ from the propeller P (101) in a windmilling braking state so as to drive the electric motor E (102),
- a first input interface (104) for the input of an input IN1,
- a first unit (105) for the control of a torque T acting on the electric motor E (102), where: T ε {T_, 0, T₊} and T_ ≤ 0 and T₊ ≥ 0,
- a second unit (106) for the detection of a rotational speed RPM_{E} of the electric motor E (102),
- a selection unit (107), by means of which an active mode AM is selected from a propulsion mode PM and a recuperation mode RM, where AM ε {PM, RM}, wherein in the recuperation mode RM the electric motor E (102) generates recuperative electrical energy E_{recup},
- an energy management system (108), by means of which an energy flow in an electrical system (109) of the aircraft, comprising the electric motor E (102), is controlled as a function of the active mode AM,
with the following steps:
Selection of the active mode AM by the selection unit (107) as a function of an input IN1 to the first input interface (104), as a function of the rotational speed RPM_{E} of the electric motor E (102) and as a function of a predetermined envelope, wherein the envelope specifies a maximum positive torque Max (T₊) and a minimum negative torque Min (T_(RPM_{E})) dependent on a rotational speed RPM_{E} of the electric motor E (102), or values dependent thereon in each case, wherein for the torque T acting on the electric motor E (102) the following applies: T = T(RPM_{E}) ε [Min (T_(RPME)), ..., Max (T₊)].

10. The method according to claim 9,
in which the input IN1 represents a percentage P, where: P (IN1) ε [0% ... 100%], and the selection unit (107) is designed and set up such that the recuperation mode RM is selected as the active mode AM, if the percentage P (IN1) related to the range of values [Min (T_(RPM_{E})), ..., Max (T₊)] represents a negative torque T (IN1, RPM_{E}), for which the following applies: T_ = T (IN1, RPM_{E}) < 0 and/or T (IN1, RPM_{E}) < T_*, wherein T_* < 0 specifies a limiting value for a negative torque T_, and wherein the following applies: P (IN1) = 0% represents Min (T_(RPM_{E})) and P (IN1) = 100% represents Max (T₊).

## Revendications

1. Système d'entraînement pour un avion, présentant
- une hélice P (101) avec des pales d'hélice,
- un moteur électrique E (102),
- un système de transmission (103) pour la transmission mécanique d'un moment positif T₊ du moteur électrique E (102) pour entraîner l'hélice P (101) et pour transmettre un moment négatif T_ de l'hélice P (101) dans un état de freinage d'éolienne pour entraîner le moteur électrique E (102),
- une première interface de saisie (104) pour saisir une entrée IN1,
- une première unité (105) pour commander un moment T agissant sur le moteur électrique E (102), comprenant : T ε {T-, 0, T₊} et T_ ≤ 0 et T₊ ≥ 0,
- une deuxième unité (106) pour détecter un nombre de tours RPM_{E} du moteur électrique E (102),
- une unité de sélection (107) au moyen de laquelle un mode AM actif est sélectionné à partir d'un mode de propulsion PM et d'un mode de récupération RM, avec AM ε {PM RM}, dans lequel le moteur électrique E (102) produit de l'énergie de récupération électrique E_{recup} dans le mode de récupération RM, et
- un système de gestion d'énergie (108), au moyen duquel un flux énergétique est commandé indépendamment du mode actif AM dans un système électrique (109) de l'avion comprenant le moteur électrique E (102),
dans lequel
- l'unité de sélection (107) est ainsi conçue et équipée que le mode actif AM est sélectionné en fonction d'une saisie IN1 dans la première interface de saisie (104), en fonction du nombre de tours RPM_{E} du moteur électrique E (102) et en fonction d'une enveloppe prédéfinie, dans lequel l'enveloppe indique un moment positif maximal Max(T₊) et un moment négatif minimal Min(T_(RPM_{E})) fonction d'un nombre de tours RPM_{E} du moteur électrique E (102) ou de valeurs respectives qui en dépendent, dans lequel pour le moment T agissant sur le moteur électrique E (102), vaut : T = T(RPM_{E}) ε [Min (T-(RPM_{E}) ), ..., Max(T₊)].

2. Système d'entraînement selon la revendication 1,
dans lequel la saisie IN1 représente un pourcentage P : P(IN1) ε [0 % ... 100 %], et l'unité de sélection (107) est ainsi conçue et équipée que le mode de récupération RM peut être alors sélectionné en tant que le mode actif AM lorsque le pourcentage P(IN1) rapporté à la plage de valeurs Min [T_ (RPM_{E}) ),..., MAX(T₊)] représente un moment négatif T(IN1,(RPM_{E}), pour lequel vaut : T-= T(IN1,RPM_{E}) < 0 et/ou T(IN1, RPM_{E}) < T-*, dans lequel T-* < 0 indique une valeur limite pour un moment négatif T-, et dans lequel vaut : P(IN1) = 0 % représente Min(T₋(RPM_{E})) et P(IN1) = 100 % représente MAX(T₊).

3. Système d'entraînement selon l'une des revendications 1 à 2,
dans lequel une troisième unité (110) est présente pour détecter le moment T agissant sur le moteur électrique E (102).

4. Système d'entraînement selon la revendication 3,
dans lequel la première unité (105) est ainsi conçue et équipée pour piloter un moment négatif T = T₋ agissant sur le moteur électrique E (102) en fonction d'au moins un de la liste suivante :
- un contenu d'énergie d'une batterie reliée au moteur électrique E (102),
- un courant de charge vers une batterie reliée au moteur électrique E (102),
- un minimum et/ou un maximum prédéfini de ce courant de charge,
- une température du moteur électrique E (102) et/ou d'une batterie,
- un minimum et/ou un maximum prédéfini de cette température,
- un état du moteur électrique E (102) et/ou de la batterie,
- un minimum et/ou un maximum prédéfini de cet état,
- une vitesse actuelle et/ou prédéfinie de l'avion,
- un minimum et/ou un maximum prédéfini de cette vitesse,
- une vitesse de descente actuelle et/ou prédéfinie de l'avion,
- un minimum et/ou un maximum prédéfini de cette vitesse de descente,
- une saisie IN1,
- un nombre de tours de l'hélice P (101) et/ou du moteur électrique E (102),
- un minimum et/ou un maximum prédéfini de ce nombre de tours,
- l'énergie de récupération E_{recup} produite actuelle,
- un minimum et/ou un maximum prédéfini de cette énergie de récupération E_{recup},
- le moment actuel T qui est transmis de l'hélice P (101) vers le moteur électrique E (102),
- un minimum et/ou un maximum prédéfini de ce moment T,
- la hauteur de vol et la température extérieure,
- l'angle de réglage des pales d'hélice.

5. Système d'entraînement selon la revendication 4,
dans lequel la première unité (105) est ainsi conçue et équipée pour régler le moment T agissant sur le moteur électrique E (102) en réglant le flux énergétique vers le/venant du moteur électrique E (102) et/ou en réglant un angle de réglage des pales d'hélice de l'hélice P (101).

6. Système d'entraînement selon l'une des revendications 1 à 5,
dans lequel un puits pour l'énergie de récupération E_{recup} et/ou un accumulateur pour l'énergie de récupération E_{recup} est présent, dans lequel le puits et/ou l'accumulateur est/sont relié(s) à un système de gestion de l'énergie (108), et dans lequel le système de gestion de l'énergie (108) commande l'utilisation de l'énergie de récupération E_{recup}.

7. Système d'entraînement selon l'une des revendications 1 à 6,
comprenant une unité d'affichage (111), dans lequel l'unité d'affichage (111) est conçue pour afficher une ou plusieurs des information(s) suivante(s) :
- information sur un moment négatif T avec lequel le moteur électrique E (102) est entraîné,
- un paramètre qui dépend de T_,
- une information sur un moment positif T₊ avec lequel l'hélice P (101) est entraînée par le moteur électrique E (102),
- un paramètre qui dépend de T₊,
- une information sur le mode actuel AM,
- l'énergie de récupération E_{recup} produite actuelle ou une grandeur qui en est dérivée.

8. Avion, comprenant un système d'entraînement selon l'une des revendications 1 à 7.

9. Procédé pour le fonctionnement d'un système d'entraînement pour un avion, dans lequel le système d'entraînement présente :
- une hélice P (101) avec des pales d'hélice,
- un moteur électrique E (102),
- un système de transmission (103) pour la transmission mécanique d'un moment positif T₊ du moteur électrique E (102) pour entraîner l'hélice P (101) et pour transmettre un moment négatif T_ de l'hélice P (101) dans un état de freinage d'éolienne pour entraîner le moteur électrique E (102),
- une première interface de saisie (104) pour saisir une entrée IN1,
- une première unité (105) pour commander un moment T agissant sur le moteur électrique E (102), avec : T ε {T_, 0, T₊} et T_ ≤ 0 et T₊ ≥ 0,
- une deuxième unité (106) pour détecter un nombre de tours RPM_{E} du moteur électrique E (102),
- une unité de sélection (107) au moyen de laquelle un mode AM actif est sélectionné à partir d'un mode de propulsion PM et d'un mode de récupération RM, avec AM ε {PM RM}, dans lequel le moteur électrique E (102) produit de l'énergie de récupération électrique E_{recup} dans le mode de récupération RM, et
- un système de gestion d'énergie (108), au moyen duquel un flux énergétique est commandé indépendamment du mode actif AM dans un système électrique (109) de l'avion comprenant le moteur électrique E (102),
comprenant les étapes suivantes :
sélection du mode actif AM par l'unité de sélection (107) en fonction d'une saisie IN1 dans la première interface de saisie (104), en fonction du nombre de tours RPM_{E} du moteur électrique E (102) et en fonction d'une enveloppe prédéfinie, dans lequel l'enveloppe indique un moment positif maximal Max(T₊) et un moment négatif minimal Min(T₋(RPM_{E})) fonction d'un nombre de tours RPM_{E} du moteur électrique E (102) ou de valeurs respectives qui en dépendent, dans lequel pour le moment T agissant sur le moteur électrique E (102), vaut : T = T(RPM_{E}) ε [Min(T_(RPM_{E})), ..., Max(T₊)].

10. Procédé selon la revendication 9,
dans lequel la saisie IN1 représente un pourcentage P : P(IN1) ε [0 % ... 100 %], et l'unité de sélection (107) sélectionne alors le mode de récupération RM en tant que le mode actif AM lorsque le pourcentage P(IN1) rapporté à la plage de valeurs Min[T_(RPM_{E})), ..., MAX(T₊)] représente un moment négatif T (IN1, (RPM_{E}), pour lequel vaut : T_= T(IN1,RPM_{E}) < 0 et/ou T(IN1, RPM_{E}) < T-*, dans lequel T-* < 0 indique une valeur limite pour un moment négatif T_, et dans lequel vaut : P(IN1) = 0 % représente Min(T_(RPM_{E})) et P(IN1) = 100 % représente MAX(T₊) .
